(19) Europäisches Patentamt
European Patent Office
Office européen des brevets

(11) Veröffentlichungsnummer: **0 307 983 B1**

## (12) EUROPÄISCHE PATENTSCHRIFT

(45) Veröffentlichungstag der Patentschrift:
12.06.91 Patentblatt 91/24

(51) Int. Cl.$^5$: **C01B 3/02**, C01B 3/50

(21) Anmeldenummer: 88201762.7

(22) Anmeldetag: 18.08.88

(54) Verfahren zur Erzeugung eines Ammoniak-Synthesegases.

(30) Priorität: 16.09.87 DE 3731055

(43) Veröffentlichungstag der Anmeldung:
22.03.89 Patentblatt 89/12

(45) Bekanntmachung des Hinweises auf die
Patenterteilung:
12.06.91 Patentblatt 91/24

(84) Benannte Vertragsstaaten:
DE ES NL

(56) Entgegenhaltungen:
EP-A- 0 119 001
FR-A- 2 368 435
GB-A- 2 192 703
CHEMICAL ABSTRACTS, Band 98, Nr. 10,
März 1983, Seite 138, Zusammenfassung Nr.
74865f, Columbus, Ohio, US; & CS-A-197 959
(L. VINS et al.) 01-06-1982

(73) Patentinhaber: METALLGESELLSCHAFT AG
Reuterweg 14 Postfach 3724
W-6000 Frankfurt/M.1 (DE)
Patentinhaber: RUHR-STICKSTOFF
AKTIENGESELLSCHAFT
Postfach 1268
W-2212 Brunsbüttel (DE)

(72) Erfinder: Higman, Christopher
Insterburgerstrasse 19
W-6231 Schwalbach/Ts. (DE)
Erfinder: Grünfelder, Gerhard
Thudichumstrasse 18-22
W-6000 Frankfurt am Main (DE)
Erfinder: Soyez, Werner, Dr.
Amselweg 5
W-2210 Itzehoe (DE)

(74) Vertreter: Rieger, Harald, Dr.
Reuterweg 14
W-6000 Frankfurt a.M. (DE)

# EP 0 307 983 B1

**Beschreibung**

Die Erfindung betrifft ein Verfahren zur Erzeugung eines aus Wasserstoff und Stickstoff bestehenden Gasgemisches für die Ammoniaksynthese, wobei man ein vor allem an Wasserstoff und Kohlenmonoxid reiches, Methan als Verunreinigung enthaltendes Gasgemisch bei einem Druck von 10 bis etwa 60 bar und Temperaturen von etwa 350 bis 550°C einer katalytischen Konvertierung unterwirft, aus dem konvertierten, $CO_2$-haltigen Gasgemisch mit einem CO-Gehalt von etwa 2 bis 8 Vol.% das $CO_2$ entfernt, das Gasgemisch auf Temperaturen von höchstens −50°C vorkühlt und das vorgekühlte, $H_2$-reiche Gasgemisch in einer Wärmeaustauschzone auf Temperaturen von höchstens −160°C weiter abkühlt, das Gasgemisch in einer Wäsche mit flüssigem Stickstoff behandelt und aus der Wäsche eine $H_2$ und $N_2$ enthaltendes Gasgemisch abzieht, das man als Kühlmittel durch die Wärmeaustauschzone führt.

Aus dem deutschen Patent 20 07 441 ist die Erzeugung eines Ammoniak-Synthesegases bekannt, wobei man durch Vergasung von Kohlenwasserstoffen ein Rohgas erzeugt, das man entschwefelt, konvertiert, von $CO_2$ befreit und schließlich zum Entfernen restlicher Verunreinigungen einer Wäsche mit flüssigem Stickstoff unterzieht. Dabei wird auch Kohlenmonoxid entfernt, das im Gemisch der Verunreinigungen enthalten ist.

Der Erfindung liegt die Aufgabe zugrunde, das in der Flüssig-Stickstoff-Wäsche vom Wasserstoff abgetrennte Kohlenmonoxid so weitgehend frei von Methan zu erhalten, daß es vollständig oder zum größten Teil in die Konvertierung zurückgeführt werden kann. In der Konvertierung wird aus Kohlenmonoxid Wasserstoff gebildet, so daß auf diese Weise die Wasserstoffausbeute des Verfahrens und damit die Menge an produziertem Synthesegas gesteigert werden kann.

Die gestellte Aufgabe wird beim eingangs genannten Verfahren dadurch gelöst, daß man in der Wärmeaustauschzone im $H_2$-reichen Gasgemisch den Taupunkt des Methans unterschreitet, und vor der Wäsche mit flüssigen Strickstoff ein methanreiches Kondensat aus dem Gasgemisch abtrennt, daß man aus dem verbleibenden Gasgemisch in der Wäsche mit flüssigem Stickstoff Kohlenmonoxid als CO-zeiches Kondensat entfernt, und das CO-reiche Kondensat in der Wärmeaustauschzone zumindest teilweise verdampft und über einer Verdichter oder Pumpe direkt in die Konvertierung leitet.

Wenn das $H_2$-reiche Gasgemisch neben Methan auch Argon enthält, sorgt man dafür, daß in der Wärmeaustauschzone im Gasgemisch der Taupunkt des Argons unterschritten wird, so daß vor der Wäsche mit flüssigem Stickstoff ein methanreiches ein methanreiches, argonhaltiges Kondensat abgetrennt werden kann.

Beim erfindungsgemäßen Verfahren wird das Methan, evtl. zusammen mit im Gasgemisch enthaltenem Argon, zum überwiegenden Teil vor der Wäsche mit flüssigem Stickstoff aus dem $H_2$-reichen Gasgemisch abgetrennt und aus dem Verfahren entfernt. Das im $H_2$-reichen Gasgemisch nun vor allem noch enthaltene Kohlenmonoxid wird in der Flüssig-Stickstoff-Wäsche ausgewaschen und kann zurück in die Konvertierung geleitet werden. Man kann deshalb die Konvertierung bei relativ hohen Temperaturen und mit einem wenig empfindlichen Katalysator, z.B. einem eisenhaltigen Katalysator, betreiben, an welchem die Konvertierungsreaktion $CO + H_2O = H_2 + CO_2$ nicht bis zur vollständigen Umsetzung des Kohlenmonoxids ausgeführt wird.

Bei bekannten Verfahren würde ein Teil des nicht konvertierten Kohlenmonoxids zusammen mit den in der Flüssig-Stickstoff-Wäsche abgetrennten Verunreinigungen entfernt und mit diesen Verunreinigungen verworfen werden. Beim erfindungsgemäßen Verfahren entfernt man die mengenmäßig wichtigsten Verunreinigungen, Methan und Argon, als Kondensat noch vor der Flüssig-Stickstoff-Wäsche. Dies geschieht auf überraschend einfache Weise durch Kühlung des wasserstoffreichen Gasgemisches in einer Wärmeaustauschzone, wobei man dieser Wärmeaustauschzone Kälte aus den Produkten der Flüssig-Stickstoff-Wäsche zuführt.

Zweckmäßigerweise leitet man das vorgekühlte, $H_2$-reiche Gasgemisch mit einem Druck von 20 bis 60 bar in die Wärmeaustauschzone, so daß das methanreiche Kondensat ebenfalls unter ziemlich hohem Druck anfällt. Wenn man dieses Kondensat beim Ableiten mindestens teilweise entspannt, erreicht man eine weitere Abkühlung, so daß das Kondensat beim Durchströmen der Wärmeaustauschzone als zusätzliches Kühlmittel wirken kann.

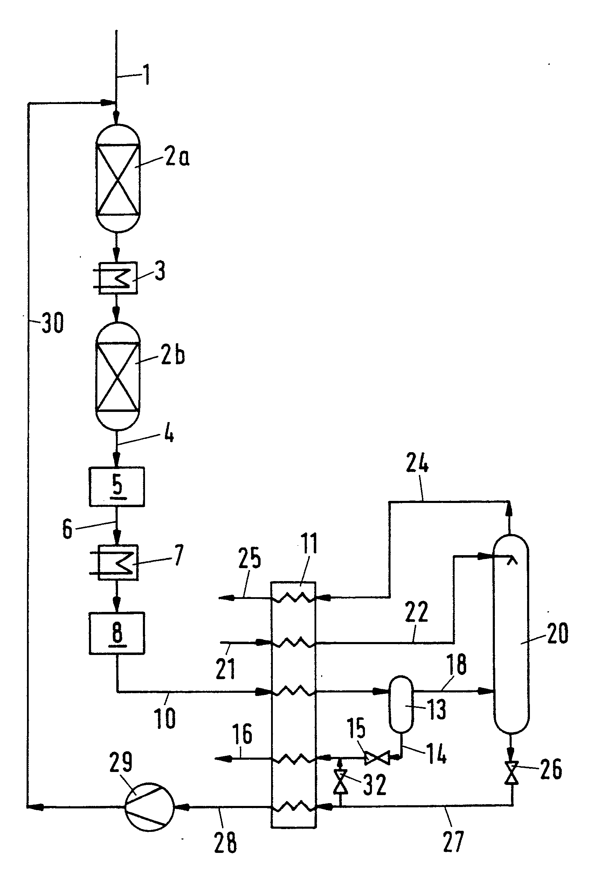

Ausgestaltungsmöglichkeiten des Verfahrens werden mit Hilfe der Zeichnung erläutert.

In der Leitung (1) wird ein Rohgas herangeführt, das entschwefelt ist und vor allem aus Wasserstoff und Kohlenmonoxid besteht und daneben auch noch Methan, Kohlendioxid und zumeist auch Argon enthält. Üblicherweise kommt dieses Rohgas aus der Vergasung von Kohlenwasserstoffen oder auch Kohle, wobei man das Produktgas der Vergasung in an sich bekannter Weise entschwefelt. Wertvoll für die Umwandlung des Gasgemisches der Leitung (1) in das gewünschte Ammoniak-Synthesegas ist einmal der Wasserstoff und zum anderen das CO, das in der zweistufigen Konvertierung (2a) und (2b) mit Zwischenkühlung (3) mit Wasserdampf katalytisch zumindest weitgehend zu $H_2 + CO_2$ umgewandelt wird. Die erste Konvertierungsstufe (2a) arbeitet bei Temperaturen von etwa 450 bis 550°C, die zweite Konvertierungsstufe (2b) bei Temperaturen von 350 bis 430°C, wobei man in beiden Stufen einen relativ unempfindlichen, an sich bekannten Konvertierungs-

2

katalysator, z.B. auf Eisenbasis, verwenden kann. Diese Katalysatoren sind auch für die hohen Drücke in der Konvertierung, die im Bereich von 10 bis etwa 60 bar liegen, vorteilhafter als Tieftemperatur-Katalysatoren.

In der Leitung (4) kommt ein Gasgemisch aus der zweiten Konvertierungsstufe (2b), das noch einen CO-Gehalt von etwa 2 bis 8 Vol.% aufweist. In der Gaswäsche (5) entfernt man das $CO_2$ durch bekannte Verfahren möglichst vollständig. Es bietet sich hierbei z.B. eine Wäsche mit Methanol bei Temperaturen im Bereich von etwa –70 bis –20°C an. Für die Weiterbehandlung des Gasgemisches ist die bereits in der Wäsche (5) erreichte Abkühlung vorteilhaft.

Das von $CO_2$ befreite, $H_2$-reiche Gasgemisch verläßt die Wäsche (5) in der Leitung (6). Falls erforderlich, kann man das Gasgemisch durch einen weiteren Kühler (7) führen.

Um Reste an $CO_2$ und Waschmittel aus dem Gasgemisch zu entfernen, empfiehlt sich ein Molekularsieb (8). Mit Temperaturen von höchstens –50°C gelangt das $H_2$-reiche Gas in der Leitung (10) in eine Wärmeaustauschzone (11), in welcher durch indirekten Wärmeaustausch mit kalten Medien eine weitere Abkühlung bis unter den Taupunkt des Methans erfolgt. Falls das Gasgemisch auch störende Mengen an Argon enthält, wird in der Zone (11) der Taupunkt dieses Edelgases unterschritten. Die druckabhängigen Taupunkte (in °C) verschiedener Komponenten des Gasgemisches sind folgende :

|  | 1 bar | 10 bar |
|---|---|---|
| $H_2$ | -253 | -242 |
| $N_2$ | -196 | -169 |
| CO | -191 | -161 |
| Ar | -186 | -157 |
| $CH_4$ | -162 | -125 |

Im $H_2$-reichen Gas bildet sich Kondensat, das vor allem aus verflüssigtem Methan und ggf. Argon besteht. Im Abscheider (13) trennt man das Kondensat ab, führt es durch die Leitung (14) zu einem Entspannungsventil (15) und erreicht durch Entspannung eine weitere Temperaturabsenkung des abgetrennten Methans. Man führt es dann durch die Wärmeaustauschzone 11), wo es als Kühlmittel dient, und zieht das Methan, ggf. im Gemisch mit Argon, in der Leitung (16) ab. Es bietet sich an, die Wärmeaustauschzone (11) als Plattenwärmeaustauscher auszugestalten.

Das $H_2$-reiche Gas, das von kondensiertem Methan und Argon befreit wurde, gelangt in der Leitung (18) zur Flüssig-Stickstoff-Wäsche (20). Falls erforderlich, kann in die Leitung ein nicht dargestellter Kühler eingeschaltet sein. Verflüssigter Stickstoff kommt aus der Leitung (21), er war zunächst in der Wärmeaustauschzone (11) etwas gekühlt worden und wird über die Leitung (22) mit Temperaturen etwa im Bereich von –180 bis –200°C in die Wäsche (20) geführt. Ein $H_2$-$N_2$-Gasgemisch verläßt die Wäsche (20) über Kopf durch die Leitung (24), erwärmt sich in der Wärmeaustauschzone (11) etwas und steht in der Leitung (25) zur Verfügung, wobei nun vor allem noch das Molverhältnis $H_2 : N_2 = 3 : 1$ in an sich bekannter Weise eingestellt wird, z.B. durch Zumischen von Stickstoff aus der Leitung (21) oder (22).

In der Flüssig-Stickstoff-Wäsche (20) gebildetes Kondensat, in welchem sich die Verunreinigungen sammeln, enthält nun vor allem CO und $N_2$ und evtl. noch geringe Mengen an $CH_4$ und Ar. Dieses Kondensat wird zunächst durch das Entspannungsventil (26) geleitet und gelangt dann in der Leitung (27) zur Wärmeaustauschzone (11), wo es ebenfalls als Kühlmittel dient, strömt in der Leitung (28) zum Verdichter (29) und wird über die Leitung (30) zur Konvertierung (2a) gefördert. Auch wenn man das ganze Kondensat, das sich in der Wäsche (20) bildet, auf diese Weise in die Konvertierung (2a) zurückführt, ist ein störendes Ansteigen des Gehalts an Verunreinigungen im Gasgemisch der Leitung (25) nicht zu befürchten, weil insbesondere Methan über den Abscheider (13) und die Leitung (16) abgetrennt und ausgeschleust wird.

Eine Verfahrensvariante besteht darin, daß man das Kondensat aus der Wäsche (20) durch das Ventil (26) nur wenig entspannt und einen Teilstrom durch das Entspannungsventil (32) in das methanreiche Kondensat hinein entspannt. Man hat dabei einen gewissen CO-Verlust in Kauf zu nehmen, führt aber der Wärmeaustauschzone (11) zusätzliche Kälte zu und behält in den Leitungen (27) und (28) einen höheren Druck, der den Energiebedarf des Verdichters (29) verringert. Eine weitere Variante besteht darin, daß man anstelle des Verdichters (29) in der Leitung (27) eine Pumpe vorsieht.

3

BEISPIELE

Im Beispiel 1 wird erfindungsgemäß mit einer Anordnung gearbeitet, die der Zeichnung entspricht, jedoch ohne das Entspannungsventil (32) und ohne den Kühler (7). Beim Beispiel 2, einem Vergleichsbeispiel, entfällt zusätzlich der Abscheider (13) mit den Leitungen (14) und (16) und dem Ventil (15), dazu wird das Sumpfprodukt der Wäsche (20) in der Leitung (28) verworfen. Beide Beispiele erzeugen $NH_3$-Synthesegas für eine Anlage für 1000 Tagestonnen Ammoniak.

In beiden Beispielen wird von einem Rohgas aus einer Schwerölvergasung ausgegangen, das entschwefelt ist und folgende Zusammensetzung hat :

| | |
|---|---|
| $CO_2$ | 4,4 Mol-% |
| CO | 48,7 Mol-% |
| $H_2$ | 46,2 Mol-% |
| $CH_4$ | 0,5 Mol-% |
| $N_2$ | 0,1 Mol-% |
| Ar | 0,1 Mol-% |

Dieses Rohgas wird im Beispiel 1 in einer Menge von 88 460 Nm³/h und im Beispiel 2 in einer Menge von 93 465 Nm³/h herangeführt. Für die Konvertierung verwendet man in beiden Beispielen Katalysatoren auf Eisenbasis, der Druck am Eintritt der ersten Konvertierungsstufe (2a) liegt bei 52 bar, die Austrittstemperatur der ersten Stufe beträgt 498°C und die Austrittstemperatur der zweiten Stufe (2b) 385°C. Die $CO_2$-Entfernung in der Wäsche (5) erfolgt mit Methanol bei etwa –62°C.

In den Anlagenteilen mit den nachfolgend genannten Bezugsziffern sind die Gaszusammensetzungen (in Mol-%) und Gasmengen (in Nm³/h) folgende, wobei die Daten des Beispiels 1 zuerst genannt sind :

| Bezugsziffer | 4 | 4 | 6 | 6 | 28 | 28 |
|---|---|---|---|---|---|---|
| $CO_2$ | 33,3 | 33,6 | – | – | – | – |
| CO | 3,2 | 3,2 | 4,8 | 4,8 | 45,3 | 43,6 |
| $H_2$ | 60,6 | 62,6 | 90,7 | 94,4 | 12,5 | 12,9 |
| $CH_4$ | 0,5 | 0,4 | 0,7 | 0,5 | 2,4 | 4,7 |
| $N_2$ | 2,0 | 0,1 | 3,2 | 0,1 | 34,9 | 37,5 |
| Ar | 0,4 | 0,1 | 0,6 | 0,2 | 4,9 | 1,3 |
| Menge | 138872 | 134635 | 92495 | 89143 | 8133 | 9886 |

In beiden Beispielen erhält man in der Leitung (25) 110 492 Nm³/h Synthesegas, das im Molverhältnis von 3 : 1 aus Wasserstoff und Stickstoff besteht. Für die Wäsche (20) führt man in der Leitung (21) im Beispiel 127857 Nm³/h und im Beispiel 2 31 235 Nm³/h Stickstoff heran. Die Wäsche (20) arbeitet bei Temperaturen zwischen Kopf und Sumpf von –192 bis –186°C bei einem Druck von 45 bar.

In beiden Beispielen sind Drücke und Temperaturen in verschiedenen Leitungen folgende :

| Leitung | 6 | 10 | 16 | 18 | 21 | 25 | 28 |
|---|---|---|---|---|---|---|---|
| Druck (bar) | 48 | 47 | 1,5 | 46 | 49 | 44 | 1,5 |
| Temperatur (°C) | –62 | –62 | 25 | –185 | 35 | 25 | 25 |

Das Verfahren des Beispiels 1, bei dem erfindungsgemäß gearbeitet wird, hat gegenüber dem Verfahren des Beispiels 2 insbesondere die Vorteile, daß die Menge an Einsatzstoff kleiner ist und man in der Leitung (21) weniger Stickstoff heranführen muß. Trotz zusätzlicher Investitionskosten ist das erfindungsgemäße Verfahren dadurch wirtschaftlicher.

## Ansprüche

1. Verfahren zur Erzeugung eines aus Wasserstoff und Stickstoff bestehenden Gasgemisches für die Ammoniaksynthese, wobei man ein vor allem an Wasserstoff und Kohlenmonoxid reiches, Methan als Verunreinigung enthaltendes Gasgemisch bei einem Druck von 10 bis etwa 60 bar und Temperaturen von etwa 350 bis 550°C einer katalytischen Konvertierung unterwirft, aus dem konvertierten, $CO_2$-haltigen Gasgemisch mit einem CO-Gehalt von etwa 2 bis 8 Vol.-% das $CO_2$ entfernt, das Gasgemisch auf Temperaturen von höchstens $-50°C$ vorkühlt, das vorgekühlte, $H_2$-reiche Gasgemisch in einer Wärmeaustauschzone auf Temperaturen von höchstens $-160°C$ weiter abkühlt, das Gasgemisch in einer Wäsche mit flüssigem Stickstoff behandelt und aus der Wäsche ein $H_2$ und $N_2$ enthaltendes Gasgemisch abzieht, das man als Kühlmittel durch die Wärmeaustauschzone führt, dadurch gekennzeichnet, daß man in der Wärmeaustauschzone im $H_2$-reichen Gasgemisch den Taupunkt des Methans unterschreitet und vor der Wäsche mit flüssigem Stickstoff ein methanreiches Kondensat aus dem Gasgemisch abtrennt, daß man aus dem verbleibenden Gasgemisch in der Wäsche mit flüssigem Stickstoff Kohlenmonoxid als CO-reiches Kondensat entfernt und das CO-reiche Kondensat in der Wärmeaustauschzone zumindest teilweise verdampft und über einen Verdichter oder eine Pumpe direkt in die Konvertierung leitet.

2. Verfahren nach Anspruch 1, dadurch gekennzeichnet, daß das Gasgemisch als Verunreinigung neben Methan auch Argon enthält und daß man in der Wärmeaustauschzone im $H_2$-reichen Gasgemisch den Taupunkt des Argons unterschreitet und vor der Wäsche mit flüssigem Stickstoff ein methanreiches, argonhaltiges Kondensat abtrennt.

3. Verfahren nach Anspruch 1 oder 2, dadurch gekennzeichnet, daß man das vorgekühlte, $H_2$-reiche Gasgemisch mit einem Druck von 20 bis 60 bar der Wärmeaustauschzone zuführt und das abgetrennte, methanreiche Kondensat zumindest teilweise entspannt und durch die Wärmeaustauschzone leitet.

4. Verfahren nach Anspruch 1 oder einem der folgenden, dadurch gekennzeichnet, daß man einen Teilstrom des CO-reichen Kondensats in das methanreiche Kondensat hinein entspannt, das entstehende Kondensatgemisch durch die Wärmeaustauschzone leitet und aus dem Verfahren entfernt.

## Claims

1. A process of producing a gas mixture consisting of hydrogen and nitrogen for the synthesis of ammonia, wherein a gas mixture which is rich mainly in hydrogen and carbon monoxide and contains methane as an impurity is subjected to a catalytic shift conversion under a pressure between 10 and about 60 bars and at temperatures between about 350 and 550°C to produce a shift-converted gas mixture which contains $CO_2$ and has a CO content between about 2 and 8% by volume, after a removal of the $CO_2$ from said shift-converted gas mixture, the latter is precooled to temperatures not in excess of $-50°C$ and the precooled high-$H_2$ gas mixture is cooled further in a heat exchange zone to temperatures not in excess of $-160°C$, the gas mixture is treated by scrubbing with liquid nitrogen and a gas mixture which contains $H_2$ and $N_2$ is withdrawn from the scrubbing treatment and is passed as a cooling medium through the heat exchange zone, characterized in that the temperature of the high-$H_2$ gas mixture is decreased in the heat exchange zone below the dew point temperature of the methane, a high-methane condensate is removed from the gas mixture before the scrubbing treatment with liquid nitrogen in said scrubbing treatment carbon monoxide is removed as a high-CO condensate, at least part of the high-CO condensate is evaporated in the heat exchange zone and is directly fed to the shift converter via a compressor or a pump.

2. A process according to claim 1, characterized in that the gas mixture in addition to methane contains argon as an impurity and the temperature of the high-$H_2$ gas mixture in the heat exchange zone is decreased below the dew point temperature of argon and an argon-containing, high-methane condensate is separated before the scrubbing treatment with liquid nitrogen.

3. A process according to claim 1 or 2, characterized in that the high-$H_2$ precooled gas mixture is fed to the heat exchange zone under a pressure between 20 and 60 bars and the high-methane condensate which has been separated is at least partly pressure-relieved and passed through the heat exchange zone.

4. A process according to claim 1 or any of the following claims, characterized in that a partial stream of the high-CO condensate is pressure-relieved into the high-methane condensate and the resulting condensate mixture is passed through the heat exchange zone and removed from the process.

## Revendications

1. Procédé de production d'un mélange gazeux constitué d'hydrogène et d'azote pour la synthèse de l'ammoniac, qui consiste à soumettre un mélange gazeux riche surtout en hydrogène et en monoxyde de carbone et contenant du méthane comme impureté, sous une pression de 10 à 60 bar environ et à des températures de 350 à 550°C environ, à une conversion catalytique, à éliminer le $CO_2$ du mélange gazeux qui a été transformé, qui contient du $CO_2$ et qui a une teneur en CO de 2 à 8% en volume environ, à prérefroidir le mélange gazeux à des températures au plus égales à –50°C, à continuer à refroidir le mélange gazeux prérefroidi et riche en $H_2$ dans une zone d'échange de chaleur, à des températures au plus égales à –160°C, à traiter le mélange gazeux par de l'azote liquide, dans un lavage, et à soutirer du lavage un mélange gazeux contenant $H_2$ et $N_2$, que l'on envoie comme agent de refroidissement dans la zone d'échange de chaleur, caractérisé en ce qu'il consiste à faire passer, dans la zone d'échange de chaleur, le mélange gazeux riche en hydrogène en-dessous du point de rosée du méthane, et à séparer du mélange gazeux, avant le lavage par l'azote liquide, un produit condensé riche en méthane, à éliminer le monoxyde de carbone, en tant que produit condensé riche en CO, du mélange gazeux restant dans le lavage par l'azote liquide, et à évaporer, au moins partiellement, le produit condensé riche en CO dans la zone d'échange de chaleur et à l'envoyer directement à la conversion, en passant par un compresseur ou par une pompe.

2. Procédé suivant la revendication 1, caractérisé en ce que le mélange gazeux contient, comme impureté, outre du méthane, de l'argon, et le procédé consiste à faire en sorte que le mélange gazeux riche en hydrogène passe dans la zone d'échangeur de chaleur, en-dessous du point de rosée de l'argon, et à séparer, avant le lavage par l'azote liquide, un produit condensé riche en méthane et contenant de l'argon.

3. Procédé suivant la revendication 1 ou 2, caractérisé en ce qu'il consiste à envoyer le mélange gazeux prérefroidi et riche en $H_2$ sous une pression de 20 à 60 bar, à la zone d'échange de chaleur, et à détendre au moins partiellement le produit condensé, séparé et riche en méthane et à l'envoyer dans la zone d'échange de chaleur.

4. Procédé suivant la revendication 1 ou l'une des suivantes, caractérisé en ce qu'il consiste à détendre un courant partiel du produit condensé riche en CO, dans le produit condensé riche en méthane, à envoyer le mélange de produit condensé qui est formé dans la zone d'échange de chaleur, et à l'éliminer du procédé.